(19) Europäisches Patentamt
European Patent Office
Office européen des brevets

(11) **EP 3 745 002 A1**

(12) **EUROPEAN PATENT APPLICATION**

(43) Date of publication:
**02.12.2020 Bulletin 2020/49**

(51) Int Cl.:
**F16H 61/42** $^{(2010.01)}$ **F04B 53/04** $^{(2006.01)}$
**F16H 61/4078** $^{(2010.01)}$

(21) Application number: **19425038.7**

(22) Date of filing: **31.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dana Motion Systems Italia S.R.L.**
**42124 Reggio Emilia (IT)**

(72) Inventors:
• **Bortoli, Andrea**
**38122 Trento (IT)**
• **Gambini, Luca**
**38068 Rovereto TN (IT)**
• **Scopesi, Marco**
**38068 Rovereto TN (IT)**

(74) Representative: **Pfenning, Meinig & Partner mbB**
**Patent- und Rechtsanwälte**
**Joachimsthaler Straße 10-12**
**10719 Berlin (DE)**

(54) **HYDROSTATIC TRANSMISSION SYSTEM**

(57) The present disclosure describes a hydrostatic transmission system comprising a hydraulic device (12). A drain line (66) extends from a drain port (60) in the hydraulic device. A fluid reservoir (68) connects to the drain line. First and second work lines (70, 72), for the transmission of hydraulic fluid to the hydraulic device, are connected to first and second ports in the hydraulic device. A pneumatic circuit (22) connects to a third port (65), in the hydraulic device, and has a control valve (76) for regulating flow of a gas to and from the hydraulic device. A control unit, for actuating the control valve, is configured to determine a target gas pressure required to drain an amount of fluid from the hydraulic device.

Fig. 1

**Description**

Technical Field

This disclosure relates to the field of hydrostatic transmission systems, particularly, to hydrostatic devices and, more particularly, to the field of drainage systems of leaked oil in hydrostatic devices.

Background

A hydrostatic transmission system involves transmission of power through a pressurization of a hydraulic fluid in a closed loop system. The hydrostatic transmission system may include a hydrostatic device that may comprise an axial piston or radial piston device. The hydrostatic device may be operated as pumps or motors. Variable axial piston hydraulic devices may be swash plate type devices or bent axis type devices.

The hydrostatic device may have a non-negligible amount of leakage oil due to high oil pressure, lubrication and cooling needs. Such leakage, in standard hydrostatic devices, may fill the housing thereof, during operation. Oil may leak through apertures in the housing. However, the leakage flow builds up the pressure in the housing. The pressure in the housing is due to the flow resistances in the leakage line and the static pressure caused by the level difference between the container and the housing, in the case of an arrangement of the container above the housing.

In order to increase the efficiency of the hydrostatic devices, a solution is to drain the housing so as to reduce excessive splashing and churning losses. At the same time, a minimum oil level in the housing is needed to avoid cold start issues, friction, wear and air entrapment within the drain line. The leakage may be discharged through a drain line to a reservoir. The presence of air in the drain line may increase the presence of foam in the reservoir that can be detrimental to the efficiency and functionality of the whole system.

The hydrostatic device may have a housing that is configured as a dry case housing to reduce energy loss through splashing. In particular, dry case type of construction may comprise a hydraulic device being integrated into the gearing casing. The hydraulic device may be comprised in a separate housing that is encompassed in the gearing casing. Alternatively, the hydraulic device may have a housing that is joined to the gearing casing.

EP0534067 discloses a hydrostatic machine, especially an axial piston machine, having a casing whose interior accommodates a driving mechanism and comprises a leaked-oil chamber which receives leaked oil and is connected to the tank via a leaked-oil connection. In order to avoid splash losses of the hydrostatic machine, a pumping appliance for discharging leaked oil from the leaked-oil chamber is disposed between the leaked-oil connection and the tank.

DE4414509 discloses a method that involves a hydrostatic machine with a housing which accommodates a drive mechanism and leak fluid. On its lower side a first connection is provided, which by means of a conduit is connected with a fluid tank. A second connection is available, which via a conduit is connected to a pressure gas source. The fluid tank is sealed, and the pressure gas source is a vacuum pump, by means of which a vacuum can be produced in the fluid tank. The vacuum pump is connected above the fluid level in the tank. A valve is fitted for removal of excess air not required for the removal of fluid at an outlet of the vacuum pump.

The present disclosure is directed, at least in part, to improving or overcoming one or more aspects of the prior art system.

Brief Summary of the Invention

The present disclosure describes, in a first aspect, a hydrostatic transmission system as defined in appended claim 1. The present discloses, in a second aspect, a method for draining fluid from a hydraulic transmission system as defined in appended claim 13.

Brief Description of the Drawings

The foregoing and other features and advantages of the present disclosure will be more fully understood from the following description of various embodiments, when read together with the accompanying drawings, in which:

Fig. 1 is a schematic diagram of a hydrostatic transmission system comprising a hydrostatic device, in a first embodiment, according to the present disclosure;
Fig. 2 is a cross sectional view of a hydrostatic device according to the present disclosure;
Fig. 2a is a cut away of the cross-sectional view of Fig. 2;
Fig. 3 is a schematic diagram of a variant of the hydrostatic transmission system of Fig. 1;
Fig. 4 is a schematic diagram of a further variant of the hydrostatic transmission system of Fig. 1;
Fig. 5 is a schematic diagram of a hydrostatic transmission system comprising the hydrostatic device, in a second embodiment, according to the present disclosure; and

Figs. 6a to 6c are graphs used for leakage flow estimation.

Detailed Description

This disclosure generally relates to a hydrostatic device and a hydrostatic transmission system leaked oil regulating systems.

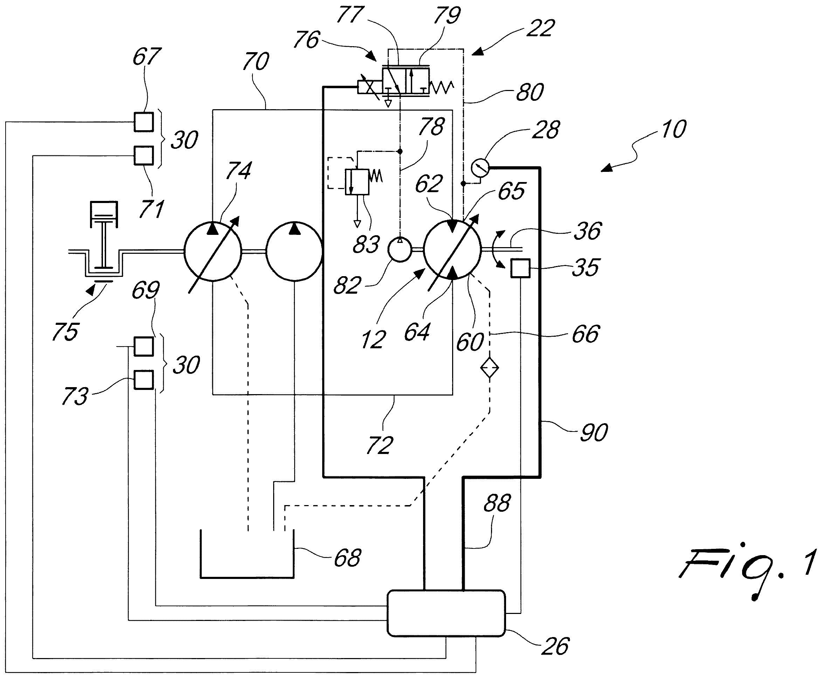

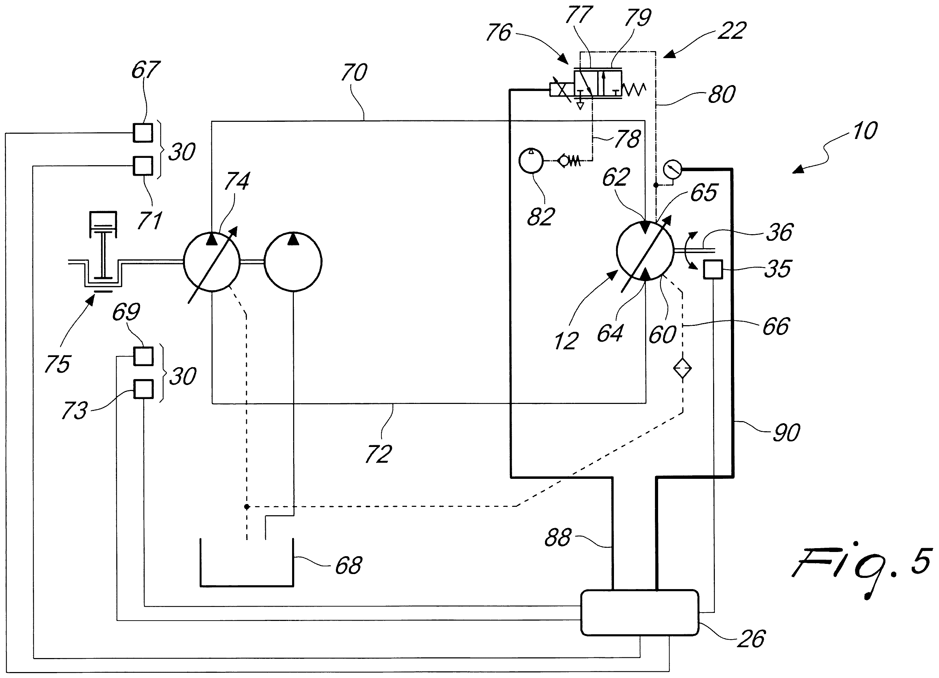

Figs. 1, 3 and 4 is a schematic illustration of a hydrostatic transmission system **10** in a first embodiment. Fig. 5 is a schematic illustration of a hydrostatic transmission system **10** in a second embodiment. In both the first and second embodiments, the hydrostatic transmission system **10** comprises a hydrostatic device **12**, a drain line **66**, a fluid reservoir **68**, first and second work lines **70**, **72**, a pneumatic circuit **22** and a control unit **26**.

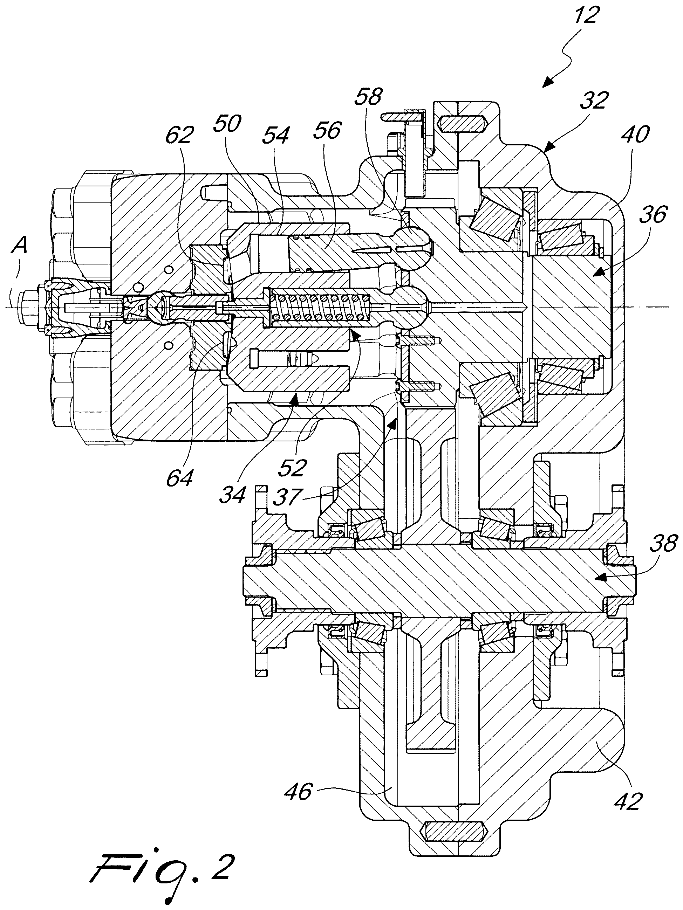

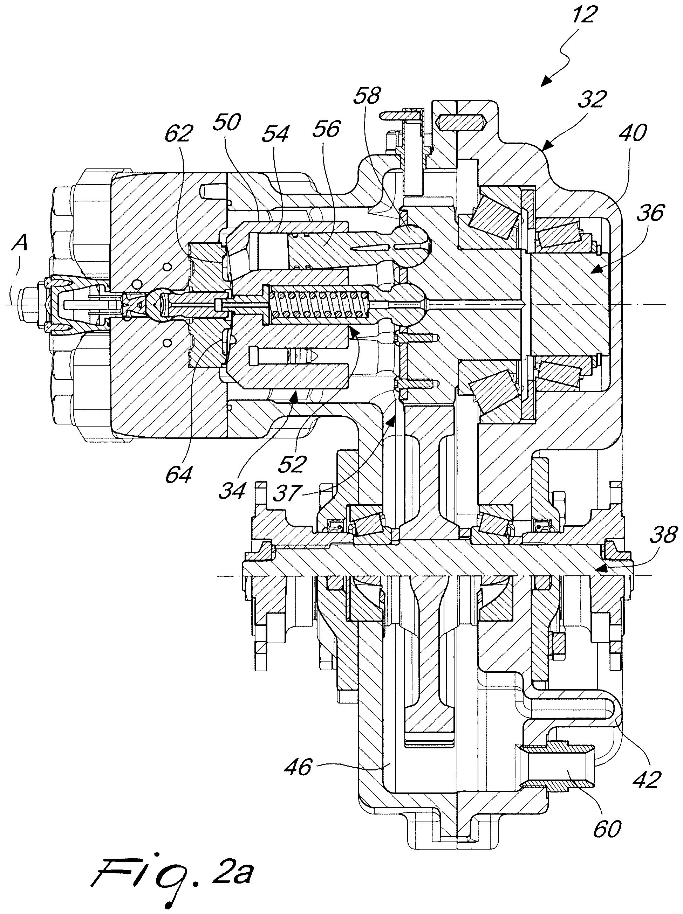

Fig. 2 illustrates an embodiment of a hydrostatic device **12**. Fig. 2 illustrates a hydraulic motor coupled to a gearing transmission. The hydrostatic device **12** may comprise a variable axial piston hydraulic device. Hydrostatic device **12** may comprise a bent-axis type device. Hydrostatic device **12** may comprise a swash plate type device. The hydrostatic device **12** may operate as a motor or a pump.

The hydrostatic device **12** comprises a housing **32**. The hydrostatic device **12** has a piston drive assembly **34**. The piston drive assembly **34** comprises a cylinder block **50** having a plurality of cylinder assemblies **52**. The cylinder block **50** is rotatable about a rotation axis **A**. The cylinder block **50** is rotatably supported in the housing **32**. The cylinder assemblies **52** are radially positioned in the cylinder block **50** relative to the rotation axis **A**. The cylinder assemblies **52** are mutually angularly spaced about the rotation axis **A**.

Each cylinder assembly **52** comprises a cylinder **54** and a piston **56**. Pistons **56** extend and retract in the cylinders **54**. Pistons **56** have a piston head **58**. Piston head **58** is positioned external to the cylinder **54**. Piston **56** travels in the cylinder **54** during a stroke of the piston **56**. The cylinder block **50** may comprise conduits for the passage of fluid to the cylinders **54** for the extension or retraction of the pistons **56**.

In an embodiment, the hydraulic device **12** may comprise a first transmission shaft **36** and a second transmission shaft **38** when the hydrostatic device **12** is configured as a motor. The first and second transmission shafts **36**, **38** may be coupled through a gearing assembly **37**. The gearing assembly **37** may comprise mesh gear wheels.

Housing **32** may have a dry case configuration. Dry type configuration provides for the piston drive assembly **34** to rotate in an environment free of lubricant fluid. The removal of lubricant fluid may occur through the flow thereof from an upper portion **40** to a lower portion **42** of the housing **32**. Housing **32** may have an oil sump **46** provided at the bottom thereof. The oil sump **46** is positioned in the lower portion **42**.

The oil sump **46** is provided to contain lubricant fluid. The fluid may originate from the piston drive assembly **34** or from the gearing in the hydrostatic device **12**. From the oil sump **46**, the lubricant fluid that has flowed in may be removed by means such as pumps (not shown) and conducted into a tank (not shown) and/or resupplied to lubricant ducts (not shown). The hydrostatic device **12** could be provided with an appropriate lubrication system (not shown) capable of controlling lubricant fluid level in the oil sump **46**.

With reference to Fig. 2a, a drain port **60** is positioned in the housing **32**. The drain port **60** enables the flow of fluid from the housing **32**. A first port **62**, a second port **64** and third port **65** are positioned in the housing **32**. The first and second ports **62**, **64** enable flow of fluid to the cylinder block **50** and the cylinders **54**.

With reference to Figs. 1, 3 to 5, a drain line **66** extends from the hydrostatic device **12**. The drain line **66** is connected to the hydrostatic device **12** at the drain port **60**. The hydrostatic transmission system **10** comprises a fluid reservoir **68**. The drain line **66** connects the hydraulic device **12** to the fluid reservoir **68**. Fluid from the hydraulic device **12** flows to the fluid reservoir **68** through the drain line **66**.

The hydrostatic transmission system **10** comprises a first work line **70** and a second work line **72**. The first and second work lines **70**, **72** interconnect a hydraulic pump **74** and the hydraulic device **12**. First and second work lines **70**, **72** are fluidly connected through the hydraulic pump **74** and the hydraulic device **12**. Hydraulic fluid in the first and second work lines **70**, **72** enable the transmission of energy from the hydraulic pump **74** to the hydraulic device **12**. The first work line **70** is provided for transmission of a hydraulic fluid at a first pressure. The second work line **72** is provided for transmission of the hydraulic fluid at a second pressure. The first and the second pressures are different. The first and second work lines **70**, **72** are connected to the hydrostatic device **12** at the first and second ports **62**, **64** respectively. The hydraulic pump **74** may be driven by an engine **75**.

The pneumatic circuit **22** is connected to the housing **32**. Pneumatic circuit **22** is configured to transmit gas to the housing **32**. The gas may be atmospheric air. Pneumatic circuit **22** is configured to transmit compressed gas to the housing **32**. The compressed gas pushes the fluid contained in the hydraulic device **32** through the drain line **66** to the fluid reservoir **68**. The pneumatic circuit **22** is connected to the housing **32** at the third port **65**.

The pneumatic circuit **22** has a control valve **76** for regulating flow of gas to and from the housing **32**. The pneumatic circuit **22** comprises a first pneumatic line **78** connecting the control valve **76** to a compressed gas source **82**. The pneumatic circuit **22** comprises a second pneumatic line **80** connecting the control valve **76** to the housing **32**.

Control valve **76** is electronically actuated. Control valve **76** is provided with a return spring. The return spring is biased against the actuation direction.

In an embodiment, the control valve is a 3 way 2 position valve. In a first position **77**, the control valve **76** connects the first pneumatic line **78** to the second pneumatic line **80**. Gas from the compressed gas source **82** may be sent to the housing **32** with the control valve **76** in the first position **77**. In a second position **79**, the control valve **76** disconnects the first pneumatic line **78** to the second pneumatic line **80**. Gas from the compressed gas source **82** cannot be sent to the housing **32** with the control valve **76** in the second position **79**. Actuation of the control valve **76** moves the control valve **76** from the second position **79** to the first position **77** for connection of the first pneumatic line **78** to the second pneumatic line **80**. The return spring is biased to move the control valve **76** from the first position 77 to the second position **79** to disconnect first pneumatic line **78** from the second pneumatic line **80**.

With reference to Figs. 1, 3 and 4, the compressed gas source **82** is a gas compressor. The hydraulic device **12** wherein the gas compressor **82** is operatively mounted to the first transmission shaft **36** or the second transmission shaft **38**. The pneumatic circuit **22** further comprises a pneumatic relief valve **83** connected to the first pneumatic line **78**.

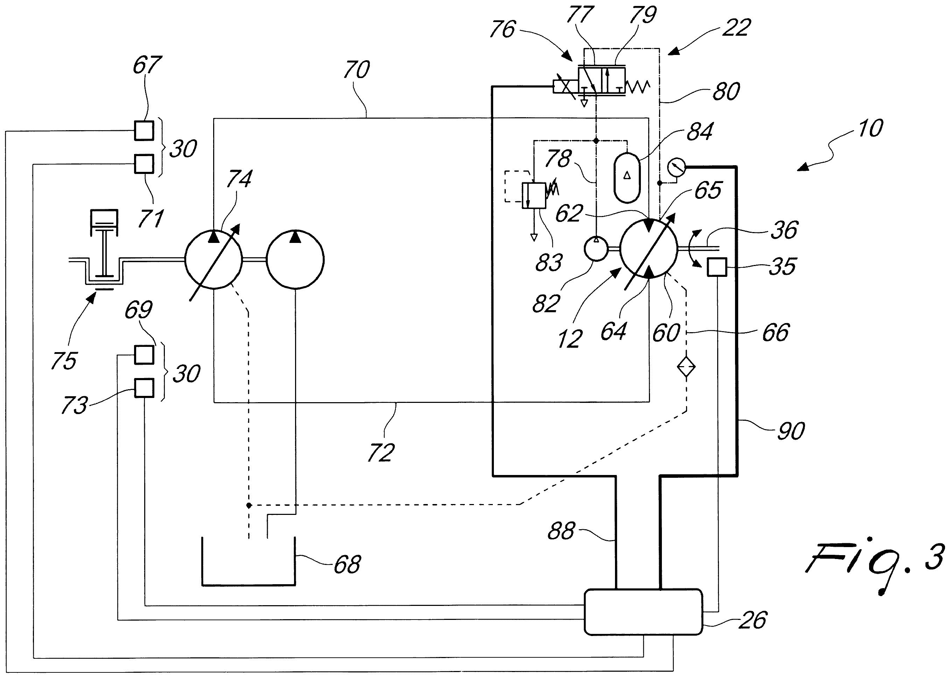

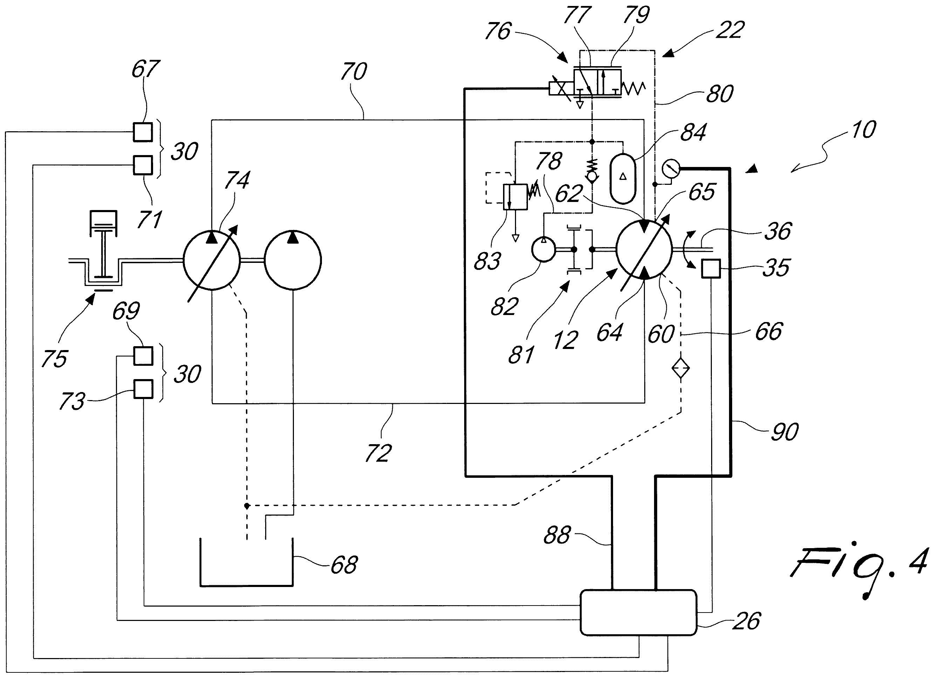

With reference to Figs. 3 and 4, the pneumatic circuit **22** further comprises a gas accumulator **84**. The gas accumulator **84** is connected to the first pneumatic line **78** between the gas compressor **82** and the control valve **76**. The gas accumulator **84** enables energy waste reduction or to allow a compressor downsizing.

With reference to Fig. 4, the pneumatic circuit **22** has a compressed gas source **82** provided with a disconnecting device **81**. The disconnecting device **81** enables the engagement and disengagement of the compressed gas source **82**.

With reference to Fig. 5, in the second embodiment of the hydraulic transmission device **10**, the compressed gas source **82** is a vehicular compressed air source. The vehicle compressed gas source is provided by the vehicular pneumatic circuit.

The control unit **26** is provided for actuating the control valve **76**. The control unit **26** regulates the pressure in the housing **32** through the control valve **76**. The control unit **26** is configured to determine a target gas pressure required to drain an amount of fluid from the housing **32** through the drain line **66**. The control unit **26** may be connected to the control valve **76** through a pulse with modulation (PWM) line **88**.

The regulation of gas pressure in the housing **32** is controlled by the control unit **26** based on several inputs. The inputs may be internal pressure of the housing **32**, hydrostatic line pressure in the first and/ or second work lines **70**, **72**, and fluid temperature in the first and/ or second work lines **70**, **72**. Further inputs may be the rotation speed and displacement of the piston drive assembly **34**. The required strategy to implement is determined by the control unit **26** based on the inputs.

The control unit **26** is connected to a plurality of estimation sensors **30**. The control unit **26** receives inputs from the plurality of estimation sensors **30** that are configured to provide operational characteristics for determining the amount of fluid to be drained. Inputs from the plurality of estimation sensors **30** received through controller area network (CAN-BUS) protocol of the control unit **26** or through analog signals.

The plurality of estimation sensors **30** comprise a speed sensor **35** for determining the displacement and rotation speed of the piston drive assembly **34**. Speed measurement may be done on the hydrostatic motor shaft, i.e. the first transmission shaft **36**, on wheels, on the output shaft or on any part of the driveline only if there is one transmission ratio. If there are two or more speeds then the speed sensor **35** must be placed at the hydrostatic motor shaft **36**

The plurality of estimation sensors **30** comprise a first and second fluid pressure sensors **67**, **69** on the first and second work lines. The plurality of estimation sensors **30** comprise a first and second fluid temperature sensors **71**, **73** on the first and second work lines **70**, **72**. In an embodiment, the plurality of estimation sensors **30** may comprise a single fluid temperature sensor on either the first or the second work lines **70**, **72**

The control unit **26** is connected to a housing pressure sensor **28**. The control unit **26** receives input from the housing pressure sensor **28** for determining the gas pressure in the housing **32**. The actual internal gas pressure is required to determine the amount of pressurised gas to send to the housing **32**. The control unit **26** may be configured to receive input from the housing pressure sensor through analog signals through line **90**.

Once the required target pressure is calculated, the control unit **26** actuates the control valve **76** in order to reach the required pressure inside the housing **32**. The control valve **76** is actuated to allow passage of compressed air into the housing so that the actual pressure matches the target pressure.

The hydrostatic transmission system **10** may comprises a loop flushing valve (not shown). In an embodiment, the loop flushing valve may be fluidly connected between the first and second work lines **70**, **72** and the hydraulic device **12**. The loop flushing valve alternatively fluidly connects the hydraulic device **12** to the first and second work lines **70**, **72**.

The amount of fluid to be drained may be further determined considering the loop flushing fluid flow. Information relating to the flushing fluid flow rate and the plumbing circuit of the vehicle, it is possible to estimate the pressure needed to overcome piping friction and height difference. The plumbing circuit of the vehicle is based on the installation of the vehicle. Plumbing friction may be obtained from the known sources.

A method for draining fluid from the hydraulic transmission system **10** comprises the steps of estimating leakage flow to determine an amount of fluid to be drained from the housing **32** of the hydraulic device **12**, estimating gas pressure to determine a target gas pressure to be maintained in the housing **32**, determining the actual gas pressure in the housing **32** and sending an actuation signal to the control valve **76** for transmission of compressed gas into the housing **32** such that the actual gas pressure corresponds to the target gas pressure.

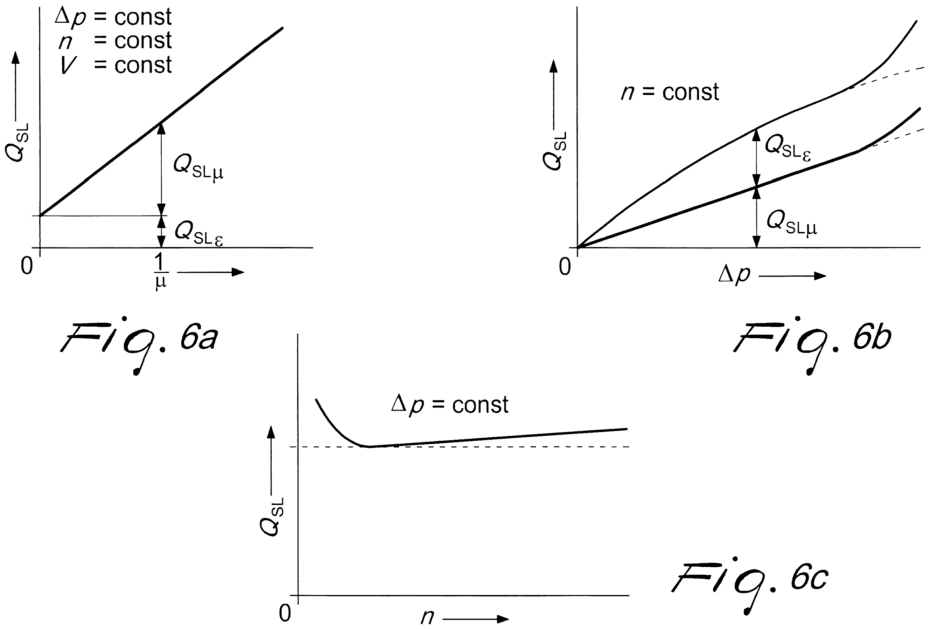

The step of estimating leakage flow comprises evaluating: fluid pressure in the first and second work lines **70**, **72**; fluid temperature in the first and second work lines **70**, **72**; and rotation speed of the piston drive assembly **34**. Based on the inputs received from the plurality of estimation sensors **30**, the estimation of leakage flow is based on a lookup table. The look up table may be based on the characterization of the hydraulic device **12**. Figs. 6a to 6c illustrate a look up table based on graphs for estimating leakage for a hydraulic device **12**.

The step of estimating leakage flow further comprises evaluating a volumetric efficiency map, a fluid viscosity model and a loop flushing model. The efficiency map may be obtained through experimentation. The fluid viscosity model and the loop flushing model can be obtained analytically.

Pressure losses of a circuit can be modeled considering two main factors: distributed losses and concentrated losses. Distributed losses $(\gamma_i * l_i)/(D_i^5)$ can be calculated knowing the piping material (relative roughness), length and diameters. Concentrated losses $\varepsilon_j/(D_j^4)$, instead, are directly related to the number of fittings and accessories mounted on the piping and its pressure-drop characteristics. From Equation 1, it is possible to calculate the hydraulic head (thus the air pressure) needed to drain fluid from the housing **32**. The main parameters are the flow speed V, the height of the tank H and the diameter of the piping D.

$$\frac{L_d}{g} = \frac{8}{\pi^2 * g} * \left( \sum_{i=1}^{n} \frac{\gamma_i * l_1}{D_i^5} + \sum_{j=1}^{m} \frac{\varepsilon_j}{D_j^4} \right) * V^2 + H_{tank}$$

Equation 1: Air pressure calculation for drainage of leaked fluid

The skilled person would appreciate that foregoing embodiments may be modified or combined to obtain the hydrostatic device **10** of the present disclosure.

Industrial Applicability

This disclosure describes a hydrostatic device **10** wherein the internal pressure of the housing is used for regulating leaked oil. The housing **32** is pressurized with compressed gas. This allows the piston drive assembly **34** to rotate in air, therefore reducing the drag losses

Compressed gas is used to drain the oil in the housing. The control unit regulates the gas flow into the housing based on several inputs. The regulation of gas flow in turn enables the regulation of leaked oil in the housing.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

**Claims**

1. A hydrostatic transmission system (10) comprising:

    a hydraulic device (12) having:

a housing (32) including an oil sump (46);
a drain port (60) positioned in the housing (32) at the oil sump (46); and
a first port (62), a second port (64) and third port (65) are positioned in the housing (32);

a drain line (66) extending from the drain port (60);
a fluid reservoir (68) connected to the drain line (66);
first and second work lines (70, 72) for the transmission of hydraulic fluid to the hydraulic device (12), the first and second work lines (70, 72) being connected to the first and second ports (62, 64);
a pneumatic circuit (22) connected to the housing (32) at the third port (65) wherein the pneumatic circuit (22) has a control valve (76) for regulating flow of a gas to and from the housing (32); and
a control unit (26) for actuating the control valve (76), wherein the control unit (26) is configured to determine a target gas pressure required to drain an amount of fluid from the housing (32) through the drain line (66).

2. The hydrostatic transmission system (10) of claim 1 wherein the control unit (26) is connected to a plurality of estimation sensors (30) configured to provide operational characteristics for determining the amount of fluid to be drained.

3. The hydraulic transmission system (10) of any one of preceding claims further comprising a piston drive assembly (34) and wherein the plurality of estimation sensors (30) comprise a speed sensor (35) for determining the displacement and rotation speed of the piston drive assembly (34).

4. The hydraulic transmission system (10) of any one of preceding claims wherein the plurality of estimation sensors (30) comprise:

   - a first and second pressure sensors (67, 69) on the first and second work lines; and
   - a first and second temperature sensors (71, 73) on the first and second work lines.

5. The hydrostatic transmission system (10) of any one of preceding claims wherein the control unit (26) is connected to a housing pressure sensor (28) for determining the gas pressure in the housing.

6. The hydrostatic transmission system (10) of any one of preceding claims wherein the pneumatic circuit (22) comprises a compressed gas source (82) and wherein a first pneumatic line (78) connects the compressed gas source (82) to the control valve (76) and wherein a second pneumatic line (80) connects the control valve (76) to the housing (32).

7. The hydrostatic transmission system (10) of claim 6 wherein the compressed gas source (82) is a gas compressor.

8. The hydraulic transmission system (10) of claim 7 wherein the hydraulic device comprises a first transmission shaft (36) and a second transmission shaft (38), the gas compressor (82) being operatively mounted to the first transmission shaft (36) or the second transmission shaft (38).

9. The hydraulic transmission system (10) of claim 6 wherein the compressed gas source (82) is a vehicular compressed air source.

10. The hydraulic transmission system (10) of any one of preceding claims wherein the control valve (76) is a 3 way 2 position valve.

11. The hydraulic transmission system (10) of any one of preceding claims wherein the hydraulic device is an axial fixed or variable displacement motor or pump .

12. The hydraulic transmission system (10) of any one of preceding claims further comprising a loop flushing valve (86) fluidly connected between the first and second work lines (70, 72) and the fluid reservoir (68).

13. A method for draining fluid from a hydraulic transmission system (10) according to any one of preceding claims, the method comprising the steps of:

   estimating leakage flow to determine an amount of fluid to be drained from the housing (32) of the hydraulic device (12);
   estimating gas pressure to determine a target gas pressure to be maintained in the housing (32);

determining the actual gas pressure in the housing (32); and
sending an actuation signal to the control valve (76) for transmission of compressed gas into the housing (32) such that the actual gas pressure corresponds to the target gas pressure.

14. The method of claim 13 wherein the step of estimating leakage flow comprises evaluating

- fluid pressure in the first and second work lines (70, 72);
- fluid temperature in the first and second work lines (70, 72); and
- rotation speed of the piston drive assembly (34).

15. The method of claims 13 or 14 wherein the step of estimating gas pressure comprises evaluating the estimated amount of fluid to be drained, the fluid reservoir height relative to the oil sump and the drain line characteristics.

Fig.1

EP 3 745 002 A1

Fig.2

Fig.2a

Fig. 3

Fig.4

EP 3 745 002 A1

Fig. 5

$\Delta p = $ const
$n \quad = $ const
$V \quad = $ const

$Q_{SL}$

$Q_{SL\mu}$

$Q_{SL\epsilon}$

$0$

$\dfrac{1}{\mu}$

Fig. 6a

$n = $ const

$Q_{SL}$

$Q_{SL\epsilon}$

$Q_{SL\mu}$

$0$

$\Delta p$

Fig. 6b

$\Delta p = $ const

$Q_{SL}$

$0$

$n$

Fig. 6c

EP 3 745 002 A1

Europäisches
Patentamt

European
Patent Office

Office européen
des brevets

# EUROPEAN SEARCH REPORT

Application Number

EP 19 42 5038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>A | DE 44 14 509 C1 (SAUER SUNDSTRAND GMBH & CO [DE]) 19 October 1995 (1995-10-19)<br>* column 3, lines 27-41; figure 1 *<br>* column 2, lines 42-49; figure 2 *<br>----- | 1,6,7, 9-12<br><br>13 | INV.<br>F16H61/42<br>F04B53/04<br>F16H61/4078 |
| X<br><br>A | US 2011/079293 A1 (GOELLNER WILHELM [DE]) 7 April 2011 (2011-04-07)<br>* paragraphs [0046] - [0050]; figures 1-3 *<br>* paragraph [0053]; figure 4 *<br>----- | 1,11,12<br><br>13 | |
| A | US 2015/354355 A1 (GOELLNER WILHELM [DE]) 10 December 2015 (2015-12-10)<br>* paragraph [0016]; figures *<br>----- | 1-15 | |
| A | US 2015/086388 A1 (HOLD CHRISTIAN [AT] ET AL) 26 March 2015 (2015-03-26)<br>* abstract; figures *<br>----- | 1-15 | |
| A,D | EP 0 534 067 A2 (HYDROMATIK GMBH [DE]) 31 March 1993 (1993-03-31)<br>* the whole document *<br>----- | 1,13 | TECHNICAL FIELDS SEARCHED (IPC)<br><br>F16H<br>F04B |

The present search report has been drawn up for all claims

| Place of search | Date of completion of the search | Examiner |
|---|---|---|
| Munich | 23 October 2019 | Meritano, Luciano |

EPO FORM 1503 03.82 (P04C01)

## ANNEX TO THE EUROPEAN SEARCH REPORT
## ON EUROPEAN PATENT APPLICATION NO.

EP 19 42 5038

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2019

| Patent document cited in search report | | Publication date | Patent family member(s) | | Publication date |
|---|---|---|---|---|---|
| DE 4414509 | C1 | 19-10-1995 | NONE | | |
| US 2011079293 | A1 | 07-04-2011 | DE 102009048099 A1<br>US 2011079293 A1 | | 09-06-2011<br>07-04-2011 |
| US 2015354355 | A1 | 10-12-2015 | CN 105134537 A<br>DE 102014210774 A1<br>US 2015354355 A1 | | 09-12-2015<br>17-12-2015<br>10-12-2015 |
| US 2015086388 | A1 | 26-03-2015 | AT 513836 A4<br>CN 104564604 A<br>EP 2853744 A1<br>JP 2015061979 A<br>US 2015086388 A1 | | 15-08-2014<br>29-04-2015<br>01-04-2015<br>02-04-2015<br>26-03-2015 |
| EP 0534067 | A2 | 31-03-1993 | DE 4128615 C1<br>EP 0534067 A2<br>JP 3485585 B2<br>JP H05202842 A | | 14-01-1993<br>31-03-1993<br>13-01-2004<br>10-08-1993 |

EPO FORM P0459

For more details about this annex : see Official Journal of the European Patent Office, No. 12/82

**EP 3 745 002 A1**

**REFERENCES CITED IN THE DESCRIPTION**

**Patent documents cited in the description**

- EP 0534067 A

- DE 4414509